# DEMANDE DE BREVET EUROPEEN

(11) **EP 0 811 505 A1**
(43) Date de publication de la demande: **10.12.1997**
(21) Numéro de dépôt: 96401180.3
(22) Date de dépôt: 03.06.1996
(51) Int. Cl.: B41M 5/035, B41M 7/00

(54) **Procédé pour la réalisation de pièces décorées par sublimation**

(71) Demandeur: SEB S.A., 69130 Ecully (FR)
(72) Inventeur: Jourdain, André, 74150 Vallières (FR)
(74) Mandataire: Keib, Gérard

(57) **Abrégé**

Le procédé selon l'invention est caractérisé par deux étapes successives d'échauffement pour sublimation : une première étape d'échauffement à température modérée, dans laquelle les colorants passent d'un film (2) sur le substrat (1) ; une seconde étape au cours de laquelle on enlève le film (2) et on chauffe ensuite le substrat (1) à plus haute température pour stabiliser les colorants et pour le déformer afin de lui conférer la forme désirée, par exemple celle d'un article culinaire.

## Description

La présente invention a pour objet la réalisation de produits ou de pièces en matière plastique dont la surface extérieure comporte un décor. Ces produits ou pièces peuvent être constitués par des articles culinaires.

Parmi les techniques connues pour décorer des objets, on a déjà utilisé l'infiltration à chaud de colorants sublimables dans l'épaisseur de la pièce en matière plastique.

On prévoit pour cela un substrat en matière plastique et un film généralement en papier et portant des colorants sublimables à chaud. On met en contact une première face de substrat et le film, à une température et pendant une durée suffisantes pour que les colorants passent à l'état gazeux et migrent dans le substrat, et pour stabiliser les colorants dans le substrat.

Pour cela, la température utilisée doit être généralement supérieure à 180°C et la durée doit être suffisante pour une migration et une stabilisation complètes des colorants.

Le problème est que, aux températures nécessaires pour une stabilisation suffisante des colorants, le substrat se ramollit, et le film tend à coller sur le substrat. L'enlèvement nécessaire du film après sublimation détériore alors la surface décorée du substrat qui doit rester visible après l'opération. On se heurte depuis longtemps à ce problème de collage des films transfert pour décor par sublimation, en particulier lorsque l film est en papier et est ainsi peu onéreux.

Diverses tentatives ont déjà été proposées pour éviter le collage du film, généralement en papier, sur le substrat. Par exemple, le document WO-A-92 21521 décrit un procédé dans lequel la sublimation s'effectue à pression inférieure à la pression atmosphérique. Cette technique nécessite la mise en oeuvre de moyens particuliers et onéreux pour mettre en dépression l'ensemble lors de la sublimation.

Des procédés de ce type ont également été décrits dans le FR-A-2 176 318 , DE-A-3 005 176 et DE-A-2 648 836.

Le problème proposé par la présente invention est de concevoir un autre procédé permettant une sublimation efficace des colorants, tout en évitant le collage du film sur le substrat et la dégradation de surface du substrat qui en résulterait, tout en réduisant la durée du processus, notamment lorsque le substrat doit aussi être déformé à chaud au cours du processus de fabrication du produit ou de la pièce.

Pour atteindre ces buts, le procédé selon l'invention comprend les étapes de :
a) prévoir un substrat en matière plastique,
b) prévoir un film portant des colorants sublimables à chaud,
c) mettre en contact une première face du substrat et le film, et soumettre le film à un premier échauffement à une température et pendant une durée suffisantes pour que les colorants sublimables passent à l'état gazeux et migrent sur le substrat, mais cette durée étant suffisamment faible pour éviter de ramollir exagérément le substrat et de provoquer alors le collage du film sur le substrat,
d) enlever le film,
e) soumettre le substrat à un échauffement supplémentaire jusqu'à stabilisation des colorants présents dans le substrat.

Suivant l'invention, ce procédé est caractérisé en ce qu'au cours de l'étape e), on déforme simultanément le substrat pour lui conférer la forme recherchée. On le refroidit ensuite pour qu'il conserve sa forme. De cette façon, on profite du formage à chaud pour stabiliser les colorants présents dans le substrat, réalisant ainsi une opération de stabilisation en temps masqué.

L'étape e) peut avantageusement s'effectuer en soumettant la première face du substrat à un rayonnement infra-rouge.

De préférence, l'étape c) s'effectue à une température de film comprise entre 180 et 200°C, et pendant une durée de 20 secondes à 90 secondes selon l'épaisseur du substrat. Ces conditions conviennent en particulier pour un substrat en une matière plastique de la famille des styréniques, ou en polypropylène ou en polychlorure de vinyle, notamment avec un film en papier.

D'autres caractéristiques et avantages de la présente invention ressortiront de la description suivante de modes de réalisation particuliers, faite en relation avec les figures jointes, parmi lesquelles :
- la figure 1 illustre la première étape d'un procédé selon l'invention;
- la figure 2 illustre les seconde et troisième étapes du procédé selon l'invention;
- la figure 3 illustre l'étape ultérieure d'échauffement sans film;
- l figure 4 illustre l'étape de formage à chaud;
- la figure 5 illustre une étape de découpage du pourtour;
- la figure 6 illustre, en coupe, une étape ultérieure de surmoulage; et
- la figure 7 illustre en coupe une structure de pièce obtenue par un procédé selon l'invention.

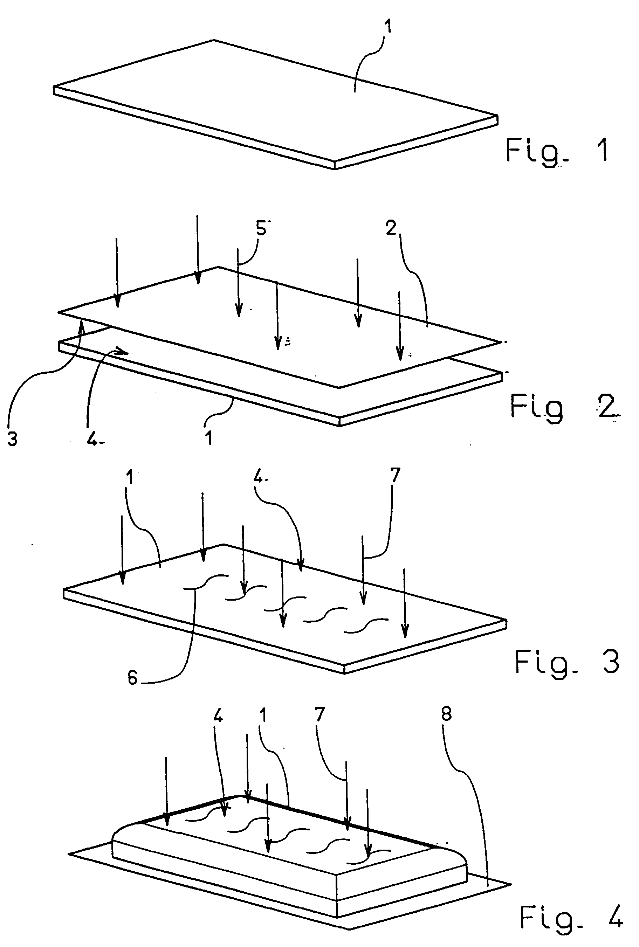

Dans le mode de réalisation illustré sur les figures 1 à 3, le procédé selon l'invention comprend une succession d'étapes permettant de réaliser une pièce en matière plastique décorée par sublimation.

Au cours de la première étape a), illustrée sur la figure 1, on prévoit un substrat 1 en matière plastique, par exemple sous forme d'une plaque d'épaisseur appropriée.

Sur la figure 2, on prévoit un film 2 portant, sur sa face inférieure 3, des colorants sublimables à chaud, c'est-à-dire capables de passer à l'état gazeux à une température d'environ 180°C à 200°C. Au cours de l'étape c), on met en contact une première face 4 de substrat 1 de la face inférieure 3 du film 2, et l'on soumet la surface supérieure du film à un premier échauffement illustré par les flèches 5, à une température et pendant une durée suffisantes pour que les colorants portés par le film 2 passent à l'état gazeux et migrent sur le substrat 1. Il faut toutefois que la durée choisie soit suffisamment faible pour que le substrat 1 ne soit pas ramolli exagérément, car ce ramollissement provoquerait le collage du film 2 sur le substrat 1.

En réalité, au cours de la première étape c) d'échauffement illustrée sur la figure 2, le premier échauffement 5 s'effectue sur le film, à température de sublimation, de 180°C à 200°C selon les colorants choisis, et pendant une durée suffisamment courte de 20 secondes à 90 secondes environ, selon l'épaisseur du substrat 1, pour que la température du substrat 1 n'excède pas 120°C à 140°C. Ce premier échauffement 5 est suffisant pour provoquer la sublimation et la migration des colorants dans le substrat 1. Mais il apparaît que ce premier échauffement 5 est insuffisant pour assurer une transformation complète et une stabilisation des colorants. Le décor intermédiaire alors obtenu est généralement dénaturé, différent en couleur du décor à obtenir, et insuffisamment résistant aux rayonnements ultra-violets.

Comme illustré sur la figure 3, on enlève ensuite le film 2, puis on soumet le substrat 1 à un échauffement supplémentaire 7, à plus haute température que celle atteinte dans le substrat 1 lors du premier échauffement 5, jusqu'à stabilisation des colorants présents dans le substrat 1. Les colorants réalisent alors le décor 6 désiré, schématiquement illustré sur la figure 3, présentant les couleurs définitives, et conservant une stabilité satisfaisante dans le temps.

Au cours de cette seconde étape e) d'échauffement supplémentaire 7, le substrat 1 atteint une température plus élevée, par exemple supérieure à 180°C, assurant la stabilisation des colorants. On peut notamment soumettre la première face 4 du substrat à un rayonnement infra-rouge.

L'avantage du procédé est que , lors de la première étape d'échauffement, la température du film est suffisante pour que les colorants migrent sur le substrat 1, mais la température du substrat 1 reste insuffisante pour que le film 2 se colle sur le substrat 1, de sorte que le film 2 peut être enlevé aisément, sans dégrader la première face 4 de substrat 1.

Si l'on veut réaliser une pièce décorée plane, il peut être utile de soumettre alors la pièce à un pressage à froid, pour éviter que le second échauffement 7 induise une déformation permanente indésirable.

Pour réaliser une pièce en volume, on peut avantageusement combiner la seconde étape d'échauffement supplémentaire illustrée sur la figure 3 avec une déformation à chaud du substrat 1. Cette combinaison est illustrée sur la figure 4, dans laquelle l'échauffement supplémentaire 7 s'effectue par un procédé de thermoformage dans un moule de mise en forme, par exemple pour incurver la plaque formant le substrat 1 selon la forme désirée. Après refroidissement, le substrat 1 conserve la forme donnée, et, généralement, un rebord 8 subsiste, par lequel la pièce était tenue lors du formage.

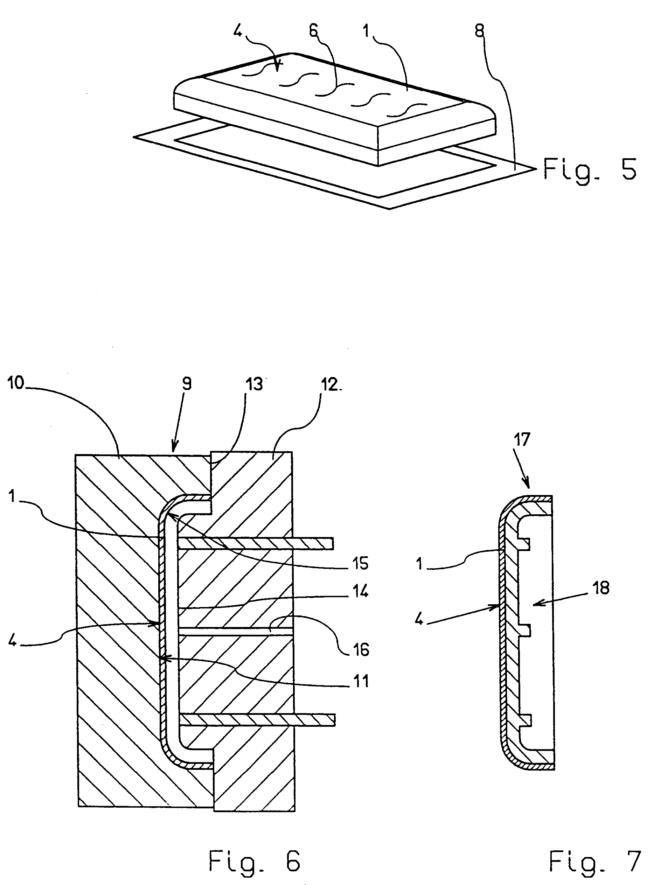

Au cours d'une étape ultérieure illustrée sur la figure 5, on peut découper le rebord 8, pour obtenir une pièce formée 1 portant le décor 6, comme illustré.

Un substrat 1 ainsi formé et décoré peut ensuite être surmoulé, sur sa seconde face 15, par injection à chaud d'un matériau thermoplastique en fusion dans un moule d'injection. Cette étape de surmoulage est illustrée sur la figure 6, sur laquelle on distingue le substrat 1 engagé dans un moule d'injection 9. Le moule d'injection 9 comporte une première demi-coque 10 comportant une face de moulage 11 conformée pour porter contre la première face 4 de substrat 1 décorée et formée. Une seconde demi-coque 12 s'adapte sur la première demi-coque 10 selon un plan de joint périphérique 13, et comporte une surface de moulage 14 faisant face à la seconde face 15 du substrat 1. La seconde face 15 de substrat 1 est à l'écart de la face de moulage 14 de la seconde demi-coque 12, laissant un espace pour l'injection d'un matériau thermoplastique en fusion par un conduit d'injection 16. On remarquera que la seconde demi-coque 12 vient en appui contre le bord périphérique du substrat 1, en position de moulage, assurant le maintien du substrat 1 et réalisant simultanément un joint d'étanchéité évitant que le matériau thermoplastique injecté se propage sur la première face 4 de substrat 1.

Comme illustré sur la figure 7, on obtient ainsi une pièce 17 dont la face extérieure est décorée, constituée par la première face 4 du substrat 1, et dont la face intérieure 18 est moulée et peut comporter des formes les plus variées.

Le procédé selon l'invention peut s'appliquer particulièrement à des substrats en une matière plastique de la famille des styréniques, ou en un polypropylène, ou en un polychlorure de vinyle. Bien que ces matériaux aient un point de ramollissement relativement bas, on peut réaliser un décor par sublimation sans risque de collage du film, ce qui permet notamment l'utilisation d'un film peu onéreux en papier portant les colorants sublimables.

La présente invention n'est pas limitée aux modes de réalisation qui ont été explicitement décrits, mais elle en inclut les diverses variantes et généralisations contenues dans le domaine des revendications ci-après.

## Revendications

1. Procédé pour la réalisation de pièces en matière plastique décorées par sublimation, comprenant les étapes de :
a) prévoir un substrat (1) en matière plastique,
b) prévoir un film (2) portant des colorants sublimables à chaud,
c) mettre en contact une première face (4) du substrat et le film (2), et soumettre le film à un premier échauffement (5) à une température et pendant une durée suffisantes pour que les colorants sublimables passent à l'état gazeux et migrent sur le substrat (1), mais cette durée étant suffisamment faible pour éviter de ramollir exagérément le substrat (1) et de provoquer alors le collage du film (2) sur le substrat (1),
d) enlever le film (2),
e) soumettre le substrat (1) à un échauffement supplémentaire (7) jusqu'à stabilisation des colorants présents dans le substrat (1), caractérisé en ce que, au cours de l'étape e), on déforme simultanément le substrat pour lui conférer la forme recherchée, et on le refroidit ensuite pour qu'il conserve sa forme.

2. Procédé selon la revendication 1, caractérisé en ce que l'étape c) s'effectue à une température de film (2) comprise entre 180°C et 200°C et pendant une durée de 20 secondes à 90 secondes, selon l'épaisseur de substrat (1).

3. Procédé selon l'une des revendications 1 ou 2, caractérisé en ce que l'étape e) s'effectue en soumettant la première face (4) du substrat (1) à un rayonnement infra-rouge.

4. Procédé selon l'une quelconque des revendications 1 à 3, caractérisé en ce que :
- au cours du premier échauffement (5) de l'étape c), la température du substrat (1) n'excède pas 120°C à 140°C,
- au cours de l'échauffement supplémentaire (7) de l'étape e), le substrat (1) atteint une température plus élevée assurant la stabilisation des colorants.

5. Procédé selon l'une des revendications 1 à 4, caractérisé en ce qu'il comprend une étape ultérieure de découpe du contour (8) du substrat (1) ainsi formé.

6. Procédé selon l'une des revendications 1 à 5, caractérisé en ce qu'il comprend une étape ultérieure de surmoulage de la seconde face (15) du substrat (1), par injection à chaud d'un matériau thermoplastique en fusion dans un moule (9).

7. Procédé selon l'une quelconque des revendications 1 à 6, caractérisé en ce que le substrat (1) est en une matière plastique de la famille des styréniques, ou en polypropylène, ou en polychlorure de vinyle.

8. Procédé selon l'une quelconque des revendications 1 à 7, caractérisé en ce que le film (2) est en papier.
